# EUROPEAN PATENT APPLICATION

(11) **EP 4 485 895 A1**
(43) Date of publication of application: **01.01.2025**
(21) Application number: 23182345.1
(22) Date of filing: 29.06.2023
(51) Int. Cl.: H04L 47/32

(54) **OPERATING A FORWARDING NODE OF A COMMUNICATION NETWORK SUSTAINABLY**

(71) Applicant: Deutsche Telekom AG, 53113 Bonn (DE)
(72) Inventor: EINSIEDLER, Hans Joachim, 13189 Berlin (DE)
(74) Representative: RDL Patentanwälte PartG mbB

(57) **Abstract**

A method for operating a forwarding node of a communication network, wherein a forwarding node of a communication network successively receives incoming IP packets, inserts received incoming IP packets into a forwarding queue to wait for being forwarded, determines waiting IP packets to be forwarded and forwards the determined IP packets to a target node via a link between the forwarding node and the target node; a forwarding node for a communication network and a computer program product.

## Description

The invention relates to a method for operating a forwarding node of a communication network, wherein a forwarding node of a communication network successively receives incoming IP packets, inserts received incoming IP packets into a forwarding queue to wait for being forwarded, determines waiting IP packets to be forwarded and forwards the determined IP packets to a neighbor node via a link between the forwarding node and the neighbor node. The invention further relates to a forwarding node for a communication network and a computer program product.

The communication network comprises a plurality of nodes and a plurality of links each link connecting two nodes. A node having at least two links is considered a forwarding node herein. The communication network is configured as an internet protocol, IP, network which allows for transmitting IP packets.

The forwarding node comprises a forwarding queue for IP packets to be forwarded, i.e., received by the forwarding node and having a destination node different from the forwarding node and accessible via the neighbor node. IP packets arriving at the forwarding node are called incoming IP packets. The forwarding node inserts each incoming packet into the forwarding queue. Inserted IP packets are extracted and forwarded to the neighbor node after having waited in the forwarding queue. The link arriving at the forwarding node and the forwarding node in combination are usually called a hop.

The forwarding node usually drops an incoming IP packet to be forwarded when the forwarding queue of the forwarding node is congested or the link to the neighbor node is overloaded. Dropping the incoming IP packet, however, may not only destroy the incoming IP packet itself but also an inherent value of the incoming IP packet.

Each IP packet within the communication network actually consumes an electric energy, both traveling along a link and being processed by a forwarding node. Apart from that, the IP packet blocks spectral resources of the traveled link and computational resources of the processing forwarding node, the blocked resources adversely affecting further IP packets within the communication network. The consumed electric energy and the blocked resources may be readily considered an inherent value of the IP packet. Each hop the IP packet covers on its way through the communication network increases the inherent value of the IP packet.

As a consequence, dropping an incoming IP packet having a high inherent value, i.e., an IP packet having covered a large number of hops, contravenes a sustainability in operating the communication network.

It is, therefore, an object of the invention to suggest a method for operating a forwarding node of a communication network which allows for a better sustainability of the communication network. Further objects of the invention are to provide a forwarding node for a communication network and a computer program product.

A first aspect of the invention is a method for operating a forwarding node of a communication network, wherein a forwarding node of a communication network successively receives incoming IP packets, inserts received incoming IP packets into a forwarding queue to wait for being forwarded, determines waiting IP packets to be forwarded and forwards the determined IP packets to a neighbor node via a link between the forwarding node and the neighbor node. The incoming IP packets come in via another link different from the link. The inserted IP packets waiting in the forwarding node have a destination node different from the forwarding node. The forwarding queue can accommodate a plurality of IP packets but has a maximum length.

The forwarding queue is congested when it has its maximum length and cannot accommodate another incoming IP packet. A congestion of the queue may occur when a rate of incoming IP packets is higher than a rate of forwarded IP packets. For instance, an overload of the link to the neighbor node may lower the rate of forwarded IP packets below the rate of incoming IP packets.

According to the invention, the forwarding node receives an incoming IP packet, determines an IP packet to be dropped and drops the determined IP packet when the forwarding queue is congested or when the link is overloaded; and the IP packet to be dropped is determined depending on an estimated inherent value of the received incoming IP packet and estimated inherent values of IP packets waiting in the forwarding queue. On the one hand, the dropped IP packet may also be a waiting IP packet, i.e., the IP packet to be dropped is selected from a large number of IP packets. On the other hand, the selection depends on the inherent values of the IP packets and, hence, takes into account energy consumption and blocking effects of the IP packets. The IP packet to be dropped may be determined to possibly avoid destroying large efforts afforded for the IP packet so far.

In an embodiment, the forwarding node determines an IP packet to be forwarded and forwards the determined IP packet, the IP packet to be forwarded being determined depending on the estimated inherent value of the received incoming IP packet and the estimated inherent values of the IP packets waiting in the forwarding queue. In other words, a larger inherent value implies a higher priority in forwarding the IP packet while a smaller inherent value implies a lower priority in forwarding the IP packet. Thus, an IP packet accelerates on its way to the destination node while traveling through the communication network.

Preferably, the forwarding node estimates the inherent value of each IP packet evaluating a data field of an IP header of the IP packet. The IP header comprises a plurality of data fields one of which allows for approximating an effort afforded for the IP packet so far.

The forwarding node may decrease a value of the data field when the IP packet is forwarded. The value of the data field decreases with each hop. The data field corresponds to a remaining lifetime of the IP packet. A short remaining lifetime indicates an old IP packet. A long remaining lifetime indicates a young IP packet.

Advantageously, the inherent value is estimated the higher the lower the value of the data field is. A low value of the data field indicates a high effort afforded for the IP packet so far.

Favorably, the inherent value is estimated the lower the higher the value of the data field is. A high value of the data field indicates a low effort afforded for the I P packet so far.

A hop limit field may be evaluated as the data field when the IP packet is an IPv6 packet. A value of the hop limit field is an unsigned integer. An initial value of the hop limit field may be 255, 128 or 64 depending on the operating system of the node creating the IP packet. An incoming IP packet with the value 0 of the hop limit field is dropped by the forwarding node instead of being forwarded.

Alternatively, a time to live, TTL, field is evaluated as the data field when the IP packet is an IPv4 packet. A value of the TTL field is a number of seconds before dropping the IP packet. An initial value of the TTL field may be 255, 128, 64 depending on the operating system of the node creating the IP packet. An incoming IP packet with the value 0 of the TTL field has not time left and is dropped by the forwarding node instead of being forwarded.

The forwarding node preferably determines the IP packet depending on a value of a probability function, the value of the probability function depending on the estimated inherent value. The probability function increases a flexibility in dropping and forwarding.

The probability function may be defined to be constantly 0 below a lower threshold, to be constantly 1 above an upper threshold and to continuously increase from 0 to 1 between the lower threshold and the upper threshold. The continuous increase may be linear or defined by any monotonuously increasing function. A probability value of 0 implies no dropping and, if applicable, forwarding immediately, respectively. A probability value of 1 implies dropping immediately and, if applicable, forwarding later, respectively. The lower threshold and the upper threshold correspond to particular inherent values wherein low values of an independent variable of the probability function correspond to high inherent values of the IP packet and high values of the independent variable of the probability function correspond to low inherent values of the IP packet. Of course, the probability function may also be defined flipped with regard to the independent variable.

The forwarding node may configure the lower threshold and/or the upper threshold depending on a length of the forwarding queue, a range of inherent values or a default inherent value and/or corresponding to an active random early detection, RED, regime or a regime provided by an artificial neural network. The configuration may be done manually or automatically. Particularly, the configuration may vary during the operation of the forwarding node.

The forwarding node particularly determines the received incoming IP packet to be dropped or wherein the forwarding node determines a waiting IP packet to be dropped. The forwarding node drops exactly one IP packet upon reception of the incoming IP packet.

Additionally or alternatively, the forwarding node determines the received incoming IP packet to be forwarded or wherein the forwarding node determines a waiting IP packet to be forwarded. The forwarding node forwards exactly one IP packet at a given time.

A second aspect of the invention is a forwarding node for a communication network. The forwarding node may be configured as a so-called router.

According to the invention, the forwarding node is configured to carry out a method according to an embodiment of the invention. The forwarding node increases a sustainability of the communication network allowing the communication network to save inherent values of IP packets.

A third aspect of the invention is a computer program product, comprising a digital storage medium storing a program code. The digital storage medium may comprise at least one of a compact disc, CD, a digital versatile disk, DVD, a universal serial bus, USB, stick, a random access memory, RAM, chip, a hard drive, HD, a cloud storage and the like.

According to the invention, the program code causes a computing device to carry out a method according to an embodiment of the invention as a forwarding node of a communication network when being executed by a processor of the computing device. The forwarding node may be implemented by means of the computer program product to increase a sustainability of the communication network.

An essential advantage of the inventive method is that it allows for increasing a sustainability of a communication network. IP packets having a smaller inherent value are more probable to be dropped than IP packets having a larger inherent value. Apart from that, IP packets having a larger inherent value are more probable to be forwarded than IP packets having a smaller inherent value. The inherent value of an IP packet corresponds to an energy consumption and a blocking effect of the IP packet while traveling along links of the communication network and being processed by forwarding nodes of the communication network.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.
- Fig. 1: schematically shows a forwarding node according to the invention for a communication network;
- Fig. 2: schematically shows a graph of a probability function for determining an IP packet to be dropped or to be forwarded.

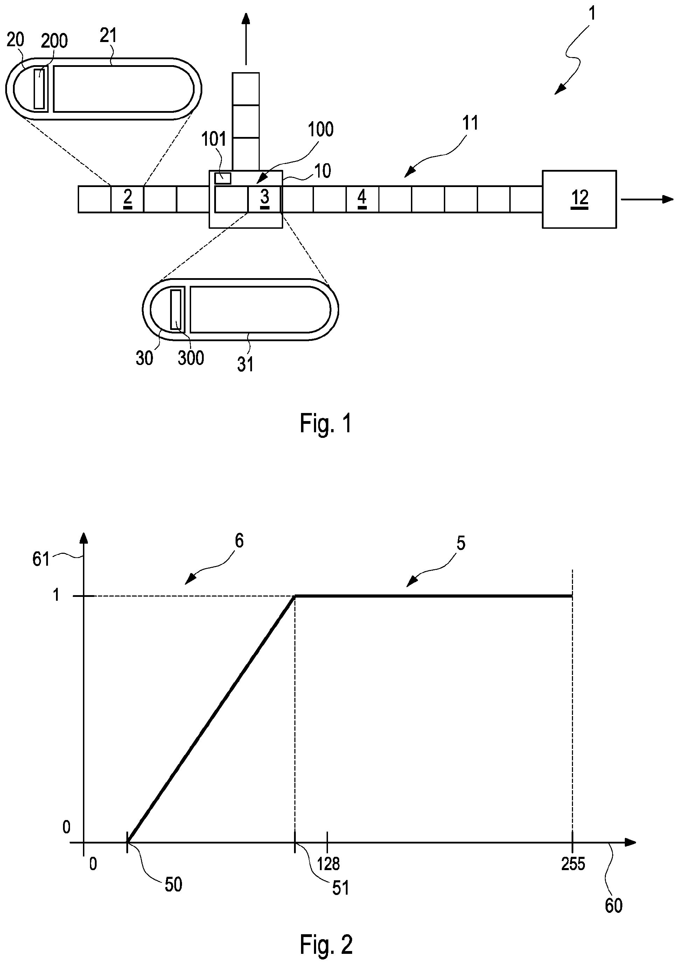

Fig. 1 schematically shows a forwarding node 10 according to the invention for a communication network 1. The forwarding node 10 is configured to carry out a method described below according to an embodiment of the invention as follows.

The forwarding node may be implemented by means of a computer program product. The computer program product comprises a digital storage medium storing a program code. The program code causes a computing device to carry out the following method of the invention as the forwarding node 10 of the communication network 1 when being executed by a processor of the computing device.

The forwarding node 10 is operated as follows.

The forwarding node 10 of a communication network 1 successively receives incoming IP packets 2, inserts received incoming IP packets 2 into a forwarding queue 100 to wait for being forwarded, determines waiting IP packets 3 to be forwarded and forwards the determined IP packets 4 to a neighbor node 12 of the communication network 1 via a link 11 of the communication network 1 between the forwarding node 10 and the neighbor node 12.

The forwarding node 10 receives an incoming IP packet 2, determines an IP packet 2, 3 to be dropped and drops the determined IP packet 2, 3 when the forwarding queue 100 is congested or the link 11 is overloaded.

The IP packet 2, 3 to be dropped is determined depending on an estimated inherent value of the received incoming IP packet 2 and estimated inherent values of IP packets 3 waiting in the forwarding queue 100.

The forwarding node 10 may determine the received incoming IP packet 2 or a waiting packet 3 to be dropped. The forwarding node 10 may determine the received incoming IP packet 2 or a waiting IP packet 3 to be forwarded.

The forwarding node 10 may determine an IP packet 2, 3 to be forwarded and forward the determined IP packet 2, 3. The IP packet 2, 3 to be forwarded may also be determined depending on the estimated inherent value of the received incoming IP packet 2 and the estimated inherent values of the IP packets 3 waiting in the forwarding queue 100.

The inherent value is estimated the higher the lower the value of the data field 200, 300 is. On the other hand, the inherent value is estimated the lower the higher the value of the data field 200, 300 is.

The forwarding node 10 preferably estimates the inherent value of each IP packet 2, 3 evaluating a data field 200, 300 of an IP header 20, 30 of the IP packet 2, 3. As usual, the IP packets 2, 3 may additionally comprise respective IP data 21, 31.

A hop limit field may be evaluated as the data field 200, 300 when the IP packet is an IPv6 packet. A time to live, TTL, field may be evaluated as the data field 200, 300 when the IP packet is an IPv4 packet. The forwarding node 10 preferably determines the IP packet 2, 3 depending on a value of a probability function 5, the value of the probability function 5 depending on the estimated inherent value.

Fig. 2 schematically shows a graph 6 of the probability function 5 for determining an IP packet 2, 3 to be dropped or to be forwarded. The graph 6 comprises an abscissa 60 indicating the inherent value of the IP packet 2, 3, i.e., a value of the data field 200, 300 and an ordinate 61 indicating a value of the probability function 6.

The probability function 5 is preferably defined to be constantly 0 below a lower threshold 50, to be constantly 1 above an upper threshold 51 and to continuously increase from 0 to 1 between the lower threshold 50 and the upper threshold 51.

The forwarding node 10 may configure the lower threshold 50 and/or the upper threshold 51 depending on a length of the forwarding queue 100, a range of inherent values or a default inherent value and/or corresponding to an active random early detection, RED, regime, a priority queuing regime or a regime provided by an artificial neural network 101.

The forwarding node 10 may decrease a value of the data field 200, 300 when the IP packet 2, 3 is forwarded.

### Reference Numerals

- 1: communication network
- 10: forwarding node
- 100: forwarding queue
- 101: artificial neural network
- 11: link
- 12: neighbor node
- 2: incoming IP packet
- 20: IP header
- 200: data field
- 21: IP data
- 3: waiting IP packet
- 30: IP header
- 300: data field
- 31: IP data
- 4: forwarded IP packet
- 5: probability function
- 50: lower threshold
- 51: upper threshold
- 6: graph
- 60: abscissa
- 61: ordinate

## Claims

1. A method for operating a forwarding node (10) of a communication network (1), wherein
- a forwarding node (10) of a communication network (1) successively receives incoming IP packets (2), inserts received incoming IP packets (2) into a forwarding queue (100) to wait for being forwarded, determines waiting IP packets (3) to be forwarded and forwards the determined IP packets (4) to a neighbor node (12) of the communication network (1) via a link (11) of the communication network (1) between the forwarding node (10) and the neighbor node (12);
- the forwarding node (10) receives an incoming IP packet (2), determines an IP packet (2, 3) to be dropped and drops the determined IP packet (2, 3) when the forwarding queue (100) is congested or the link (11) is overloaded;
- the IP packet (2, 3) to be dropped is determined depending on an estimated inherent value of the received incoming IP packet (2) and estimated inherent values of IP packets (3) waiting in the forwarding queue (100).

2. The method according to claim 1, wherein the forwarding node (10) determines an IP packet (2, 3) to be forwarded and forwards the determined IP packet (2, 3), the IP packet (2, 3) to be forwarded being determined depending on the estimated inherent value of the received incoming IP packet (2) and the estimated inherent values of the IP packets (3) waiting in the forwarding queue (100).

3. The method according to claim 1 or 2, wherein the forwarding node (10) estimates the inherent value of each IP packet (2, 3) evaluating a data field (200, 300) of an IP header (20, 30) of the IP packet (2, 3).

4. The method according to claim 3, wherein the forwarding node (10) decreases a value of the data field (200, 300) when the IP packet (2, 3) is forwarded.

5. The method according to claim 3 or 4, wherein the inherent value is estimated the higher the lower the value of the data field (200, 300) is.

6. The method according to one of claims 3 or 4, wherein the inherent value is estimated the lower the higher the value of the data field (200, 300) is.

7. The method according to one of claims 3 to 6, wherein a hop limit field is evaluated as the data field (200, 300) when the IP packet is an IPv6 packet.

8. The method according to one of claims 3 to 7, wherein a time to live, TTL, field is evaluated as the data field (200, 300) when the IP packet is an IPv4 packet.

9. The method according to one of claims 1 to 8, wherein the forwarding node (10) determines the IP packet (2, 3) depending on a value of a probability function (5), the value of the probability function (5) depending on the estimated inherent value.

10. The method according to claim 9, wherein the probability function (5) is defined to be constantly 0 below a lower threshold (50), to be constantly 1 above an upper threshold (51) and to continuously increase from 0 to 1 between the lower threshold (50) and the upper threshold (51).

11. The method according to claim 10, wherein the forwarding node (10) configures the lower threshold (50) and/or the upper threshold (51) depending on a length of the forwarding queue (100), a range of inherent values or a default inherent value and/or corresponding to an active random early detection, RED, regime, a priority queuing regime or a regime provided by an artificial neural network (101).

12. The method according to one of claims 1 to 11, wherein the forwarding node (10) determines the received incoming IP packet (2) to be dropped or wherein the forwarding node (10) determines a waiting IP packet (3) to be dropped.

13. The method according to one of claims 1 to 12, wherein the forwarding node (10) determines the received incoming IP packet (2) to be forwarded or wherein the forwarding node (10) determines a waiting IP packet (3) to be forwarded.

14. A forwarding node (10) for a communication network (1), being configured to carry out a method according to one of claims 1 to 13.

15. A computer program product, comprising a digital storage medium storing a program code, the program code causing a computing device to carry out a method according to one of claims 1 to 13 as a forwarding node (10) of a communication network (1) when being executed by a processor of the computing device.

## Amended claims

### Amended claims in accordance with Rule 137(2) EPC.

1. A method for operating a forwarding node (10) of a communication network (1), wherein
- a forwarding node (10) of a communication network (1) successively receives incoming IP packets (2), inserts received incoming IP packets (2) into a forwarding queue (100) to wait for being forwarded, determines waiting IP packets (3) to be forwarded and forwards the determined IP packets (4) to a neighbor node (12) of the communication network (1) via a link (11) of the communication network (1) between the forwarding node (10) and the neighbor node (12);
- the forwarding node (10) receives an incoming IP packet (2), determines an IP packet (2, 3) to be dropped and drops the determined IP packet (2, 3) when the forwarding queue (100) is congested or the link (11) is overloaded;
- the IP packet (2, 3) to be dropped is determined depending on an estimated inherent value of the received incoming IP packet (2) and estimated inherent values of IP packets (3) waiting in the forwarding queue (100), wherein the forwarding node (10) determines the IP packet (2, 3) depending on a value of a probability function (5), the value of the probability function (5) depending on the estimated inherent value.

2. The method according to claim 1, wherein the forwarding node (10) determines an IP packet (2, 3) to be forwarded and forwards the determined IP packet (2, 3), the IP packet (2, 3) to be forwarded being determined depending on the estimated inherent value of the received incoming IP packet (2) and the estimated inherent values of the IP packets (3) waiting in the forwarding queue (100).

3. The method according to claim 1 or 2, wherein the forwarding node (10) estimates the inherent value of each IP packet (2, 3) evaluating a data field (200, 300) of an IP header (20, 30) of the IP packet (2, 3).

4. The method according to claim 3, wherein the forwarding node (10) decreases a value of the data field (200, 300) when the IP packet (2, 3) is forwarded.

5. The method according to claim 3 or 4, wherein the inherent value is estimated the higher the lower the value of the data field (200, 300) is.

6. The method according to one of claims 3 to 5, wherein the inherent value is estimated the lower the higher the value of the data field (200, 300) is.

7. The method according to one of claims 3 to 6, wherein a hop limit field is evaluated as the data field (200, 300) when the IP packet is an IPv6 packet.

8. The method according to one of claims 3 to 7, wherein a time to live, TTL, field is evaluated as the data field (200, 300) when the IP packet is an IPv4 packet.

9. The method according to one of claims 1 to 8, wherein the probability function (5) is defined to be constantly 0 below a lower threshold (50), to be constantly 1 above an upper threshold (51) and to linearly increase from 0 to 1 between the lower threshold (50) and the upper threshold (51).

10. The method according to claim 9, wherein the forwarding node (10) configures the lower threshold (50) and/or the upper threshold (51) depending on a length of the forwarding queue (100), a range of inherent values or a default inherent value and/or corresponding to an active random early detection, RED, regime or a regime provided by an artificial neural network (101).

11. The method according to one of claims 1 to 10, wherein the forwarding node (10) determines the received incoming IP packet (2) to be dropped or wherein the forwarding node (10) determines a waiting IP packet (3) to be dropped.

12. The method according to one of claims 1 to 11, wherein the forwarding node (10) determines the received incoming IP packet (2) to be forwarded or wherein the forwarding node (10) determines a waiting IP packet (3) to be forwarded.

13. A forwarding node (10) for a communication network (1), being configured to carry out a method according to one of claims 1 to 12.

14. A computer program product, comprising a digital storage medium storing a program code, the program code causing a computing device to carry out a method according to one of claims 1 to 12 as a forwarding node (10) of a communication network (1) when being executed by a processor of the computing device.
